# EUROPEAN PATENT SPECIFICATION

(11) **EP 3 048 760 B1**
(45) Date of publication and mention of the grant of the patent: **02.08.2017**
(21) Application number: 16152181.0
(22) Date of filing: 21.01.2016
(51) Int. Cl.: H04L 12/40

(54) **MODULAR SIGNAL INTERFACE UNIT**
MODULARE SIGNALSCHNITTSTELLENEINHEIT
UNITÉ D'INTERFACE DE SIGNAL MODULAIRE

(30) Priority: 22.01.2015 US 201514602485
(43) Date of publication of application: 27.07.2016
(73) Proprietor: Hamilton Sundstrand Corporation, Charlotte, NC 28217 (US)
(72) Inventor: POISSON, Richard A., Avon, CT Connecticut 06001 (US)
(74) Representative: Iceton, Greg James

(56) References cited:
- EP-A1- 0 931 399
- EP-A2- 1 973 018
- US-A1- 2002 161 488
- US-A1- 2003 018 840

## Description

### BACKGROUND

The present invention relates generally to aircraft electronic systems, and in particular to a modular system for aircraft electronic components.

Aircraft systems, such as engine control systems, fuel control systems, lighting systems, and other control systems are often implemented electronically and communicate over aircraft data buses. These aircraft may implement, for example, network based backbone systems to send and receive data to and from signal interface units (SIU) to system level computers. In the past, the SIUs have been implemented as unique devices that accomplish a single task and are tailored for specific aircraft. This design can become quite costly because every new aircraft requires a new set of boxes regardless of whether functionality remains the same. It is desirable to create electronic systems that are modular and may be utilized in multiple aircraft.

In U.S. 2003/0018840, a power transfer system is disclosed that includes modular power conversion apparatuses for connecting a system power bus to aircraft components. In EP 0931399 A1, a virtual backplane architecture is disclosed that allows all systems on an aircraft to communicate with one another regardless of location.

### SUMMARY

A signal interface unit for use on an aircraft is defined according to the features of claim 1. Further features are defined in the respective dependent claims.

### BRIEF DESCRIPTION OF THE DRAWINGS

FIG. 1 is a block diagram illustrating a modular signal interface unit for an aircraft electronic system.
FIG. 2 is a line diagram illustrating a modular signal interface unit configuration for an aircraft electronic system.
FIG. 3 is a line diagram illustrating a modular vehicle management system computer.

### DETAILED DESCRIPTION

A modular signal interface unit (SIU) is disclosed herein that may be utilized to interface with any aircraft subsystem module. An aircraft electronics system may include a plurality of modular SIUs connected to, for example, aircraft data buses. A plurality of subsystem modules may be connected to each modular SIU. The subsystem modules may be used, for example, to provide control, or perform other critical functions, for aircraft systems. Each subsystem module may be removed, replaced, and/or repaired at any time.

Each SIU may interface with any subsystem module through multiple communication links. These may include, for example, high speed deterministic and non-deterministic links as well as low-speed links. Power may also be controlled and supplied to each subsystem module through the SIU. The SIU may communicate with other electronic systems on the aircraft over the aircraft data buses. The SIU may communicate with the aircraft bus using, for example, a triplex time-deterministic communication link to ensure data integrity to and from control systems. Configuring aircraft electronic systems in this way is advantageous in that aircraft control systems may be easily removed, repaired, and/or replaced. This also provides system redundancy by allowing, for example, multiple redundant subsystem control modules to be attached to separate SIUs onboard the aircraft.

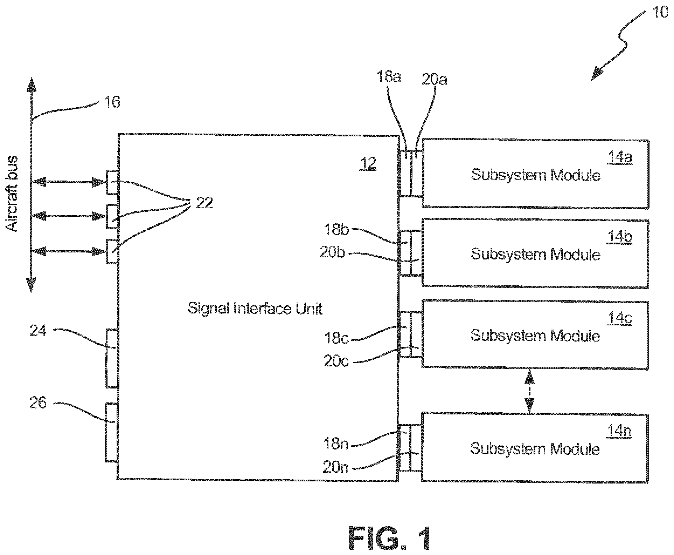

FIG. 1 is a block diagram illustrating an electronic system 10 that includes a modular signal interface unit (SIU) 12. System 10 includes SIU 12, subsystem modules 14a-14n, and aircraft bus 16. SIU 12 includes connectors 18a-18n that connect to connectors 20a-20n of subsystem modules 14a-14n. SIU 12 also includes communication connector 22, test connector 24, and power connector 26. Communication connector 22 may provide, for example, triplex TTEthernet® communication to and from aircraft bus 16 to allow communication between SIU 12 and other aircraft electronic systems, such as other SIUs 12. Connectors 18a-18n, 20a-20n, 22, 24, and 26 may be implemented as any male or female type electronic connectors. Although illustrated as a single SIU 12, any number of SIUs 12 may be included in aircraft electronic system 10. Any number of subsystem modules 14a-14n may be connectable to SIU 12 such as, for example, one, two, four, eight, or any other desirable number of subsystem modules.

SIU 12 may be implemented, for example, as a generic interface that acts as a gateway for subsystem modules 14a-14n to aircraft data bus 16. Aircraft data bus 16 may be, for example, an Aeronautical Radio, Incorporated (ARINC^{®}) bus, a Controller Area Network (CAN) bus, or any other data bus utilized onboard aircraft. For example, subsystem modules 14a-14n may be utilized for landing gear systems, fuel systems, avionics systems, and/or any other aircraft electronic systems.

Subsystem modules 14a-14n provide, for example, specific control or monitoring for aircraft systems. Connectors 20a-20n of subsystem modules 14a-14n are connectable to any of connectors 18a-18n of any SIU 12. This allows any subsystem module 14a-14n to be swapped with any other subsystem module 14a-14n at any time. This makes removal, repair, and replacement of aircraft electronic systems more convenient, cheaper, and timelier.

In an embodiment, subsystem module 14a may, for example, read vibration channels for engine vibration. Subsystem module 14a may, for example, quantify the vibration data, perform signal processing (such as analog-to-digital and/or digital-to-analog conversion), determine faults, and/or perform any other function relating to the monitored vibration data. Subsystem 14a may then send the data to SIU 12 through connector 20a. SIU 12 may then, for example, relay the data to a health monitoring control unit (not shown) over aircraft data bus 16. Because all of the hardware utilized to sample and convert the vibration data is contained within subsystem module 14a, subsystem module 14a may be easily moved from one SIU 12 to another. This way, subsystem modules 14a-14n may all have a common interface through respective connector 20a-20n, as opposed to requiring the ability to interface with each aircraft bus as well as other aircraft electronic systems directly. This provides the ability to remove and replace subsystem modules 14a-14n without needing to remove, repair, and/or replace entire avionics systems.

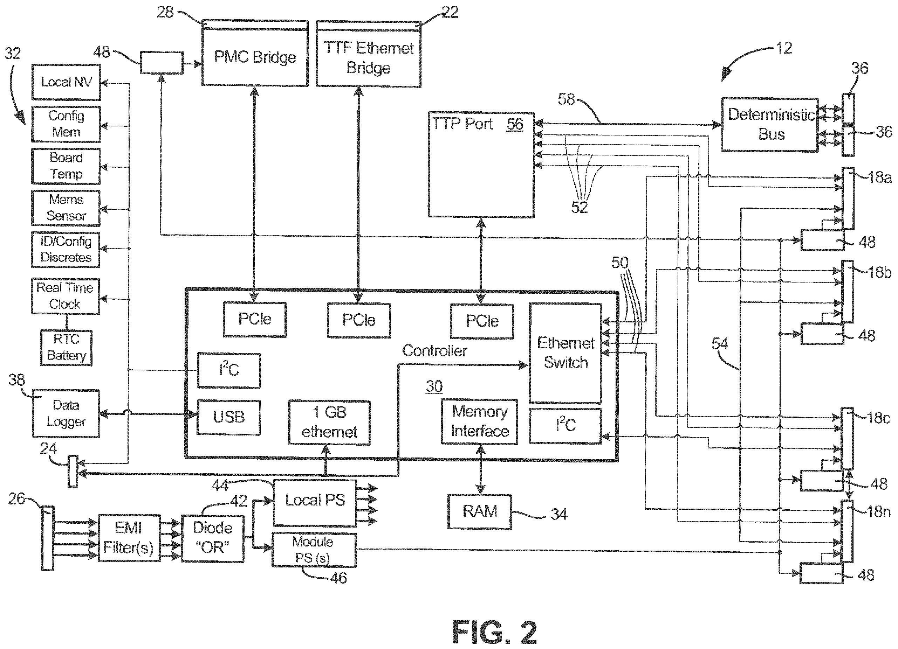

With continued reference to FIG. 1, FIG. 2 is a line diagram illustrating an example configuration of SIU 12 for aircraft electronic system 10. SIU 12 includes subsystem module connectors 18a-18n, aircraft bus connector 22, test connector 24, power connector 26, output connector 28, controller 30, components 32, memory 34, deterministic bus connectors 36, data logger 38, Diode OR module 42, local power supply 44, module power supply 46, hot-swap controllers 48, communication links 50, 52, and 54, communication hub 56, and deterministic link 58.

External power may be received through power connector 26. This power may be received from any aircraft power source such as, for example, alternating current (AC) or direct current (DC) power buses powered by aircraft generators. Diode OR module 42 may be utilized, for example, to select the input power line having the highest signal quality. Local power supply 44 may condition and provide power for the local components of SIU 12. Module power supply 46 may condition and provide power to, for example, external systems such as subsystem modules 14a-14n. Power is provided to these external systems through individual hot-swap controllers 48. Hot-swap controllers 48 may be utilized to allow external components that receive power to be removed or replaced without shutting off power to SIU 12.

Controller 30 may be implemented as any communication based processor such as, for example, a Freescale® QorlQ T1040, or any other suitable microcontroller. In an embodiment, controller 30 may perform no computations for specific aircraft functions. Rather, SIU 12 may provide an industry standard interface, such that any subsystem module 14a-14n may interface with any SIU 12, regardless of the aircraft in which SIU 12 is installed. Memory 34 may be implemented for use with controller 30 and may be any suitable memory such as, for example, double data rate type three (DDR3) synchronous dynamic random-access memory (SRAM). Controller 30 may also interface with data logger 38 which may be, for example, a sixty-four gigabyte (GB) non-volatile memory that interfaces with controller 30 through a universal serial bus (USB) connection.

In the embodiment shown in FIG. 2, to interface with aircraft data bus 16, communication interface 22 may be a TTEthernet^{®} (TTE) communication link. Although illustrated as a TTE link, communication interface 22 may be any time deterministic bus. Controller 30 may format data and send it to aircraft data bus 16 through interface 22 which may include a TTE bridge. Interface 22 may be, for example, a triplex interface to provide greater reliability for the data provided to aircraft data bus 16. Communication interface 22 may communicate with controller 30 through, for example, a peripheral component interface express (PCIe) connection. SIU 12 may also receive data from aircraft data bus 16 through interface 22.

In addition to interface 22, SIU 12 may include additional communication through interface 28, which may be a peripheral component interface (PCI) mezzanine card (PMC) interface which may also communicate with controller 30 through a PCIe interface. Communication interface 28 may also be implemented as any other communication link capable of communicating with an aircraft communication bus.

In the embodiment illustrated in FIG. 2, components 32 include local non-volatile memory, configuration storage, temperature sensors, vibration sensors (such as microelectromechanical (MEMs) sensors), and a real-time clock. Components 32 may also include any other local components desirable within SIU 12. Components 32 may be used, for example, to monitor the health of SIU 12, provide usage and/or configuration data for SIU 12, and/or provide backup information to supplement aircraft primary sensors.

SIU 12 may interface with subsystem modules 14a-14n using communication links 50, 52, and 54. Communication link 50 may be implemented as, for example, a high speed non-deterministic communication link such as Ethernet. Controller 30 may include an Ethernet switch that allows communication between each connector 18a and controller 30. The Ethernet switch may also provide a connection between controller 30 and test interface 24 such that data may be accessed from controller 30 through test interface 24.

Communication link 52 may be, for example, a high speed deterministic bus, such as a time-triggered protocol (TTP) bus. With a high speed deterministic bus, each message is scheduled at a specific time using, for example, time division multiplex access (TDMA). This provides high-integrity data communication with subsystem modules 14a-14n. Communication link 52 may be provided to connectors 18a-18n through TTP hub 56. TTP hub 56 may include a high speed port for high speed deterministic communication between controller 30 and subsystem modules 14a-14n. TTP hub 56 may also provide a low speed deterministic port for providing further deterministic communication with external systems on communication link 58 through interfaces 36.

Communication link 54 may be, for example, a low speed bus such as an inter-integrated circuit (I²C) bus. Link 54 may be utilized for status information, configuration information, built-in-test, or any other lower-priority communication. Controller 54 may also include a separate I²C bus for communication with components 32 and test connector 24, such that data from controller 30 and components 32 may be accessed through test connector 24.

Subsystem modules 14a-14n may therefore, regardless of function, be designed to include a generic interface that communicates with any SIU 12 through communication links 50, 52, and 54. While illustrated with three communication links 50, 52, and 54, SIU 12 may be configured to provide any number of communication links to each connector 18a-18n. Subsystem modules 14a-14n may also be configured to generically receive power through connectors 18a-18n from module power supply 46. Module power supply 46 may also be configured to provide power scheduling for subsystem modules 14a-14n. For example, module power supply 46 may prioritize power based upon which subsystem modules 14a-14n are connected to SIU 12. In the event of a fault or other power condition, module power supply 46 may provide prioritized power to subsystem modules 14a-14n having highest priority.

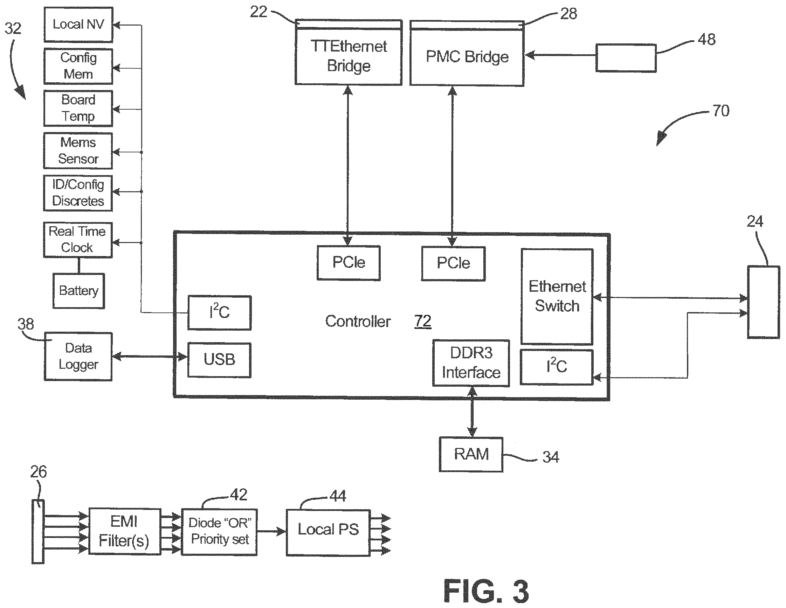

With continued reference to FIGS. 1 and 2, FIG. 3 is a line diagram illustrating an example modular vehicle management system computer (VMSC) 70. VMSC 70 may be implemented in a similar manner to SIU 12 of FIG. 2, with common components having common reference numerals. VMSC 70 may be utilized to perform, for example, control laws for aircraft systems. In the embodiment shown in FIG. 3, VMSC 70 does not perform any input/output (I/O) data trafficking and is utilized to perform control laws for aircraft systems. Therefore, VMSC 70 does not include any output connectors 18a-18n. While SIU 12 may be configured to perform both I/O and control laws, the use of VMSC 70 to perform system specific computation allows the aircraft electronic systems to be physically smaller due to VMSC 70 requiring fewer components than a generic SIU 12.

In an embodiment, an aircraft may include, for example, twenty SIUs 12, three VMSCs 70, and one hundred sixty subsystem modules 14a-14n with, for example, eight subsystem modules 14a-14n connected to each SIU 12. In addition to providing improved removal, replacement, and repair for aircraft electronic systems, this implementation provides the ability for redundancy and distributed control. For example, three subsystem modules 14a-14n may be implemented for fuel control, with each module connected to a separate SIU 12. Each fuel control module may report data, through a connected SIU 12, to a VMSC 70. VMSC 70 may implement the fuel control laws and provide instructions back through SIUs 12 to the respective fuel control modules. The fuel control modules may then provide control for the respective fuel pumps, and/or valves accordingly. Although described for a fuel control system, any aircraft electronic system may be implemented in this way.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A signal interface unit (12) for use on an aircraft, the signal interface unit including a micro controller, at least one connector (18a-18n), and a first communication link (50) connected between the microcontroller and the at least one connector, wherein the microcontroller is configured to transmit and receive data on the first communication link, the signal interface unit (12) **characterized by**:
a second communication link (22) connected to the microcontroller, wherein the microcontroller is configured to send and receive data on an aircraft data bus using the second communication link, wherein the first communication link (50) is an Ethernet link and the second communication link is a time-triggered Ethernet link;
a third communication link (54) connected between the microcontroller and the at least one connector, wherein the third communication link (54) is an inter-integrated circuit link; and
a fourth communication link (52) connected between the microcontroller and the at least one connector, wherein the fourth communication link (52) is a high speed deterministic link.

2. The signal interface unit (12) of claim 1, further comprising a power supply unit configured to provide power through the at least one connector.

3. The signal interface unit (12) of any preceding claim, further comprising:
a data logger; and
a plurality of sensors.

4. An aircraft system comprising:
the signal interface unit of claim 1; and
a first subsystem module configured to communicate with the signal interface unit (12) through the first communication link (50).

5. The aircraft system of claim 4, wherein the first subsystem module is further configured to communicate with the signal interface unit (12) through the third and fourth communication links.

6. The aircraft system of claims 4 or 5, further comprising:
a plurality of second subsystem modules configured to communicate with the signal interface unit (12) through the first communication link (50).

7. The aircraft system of claims 4-6, further comprising:
a vehicle management system computer comprising:
a controller configured to execute control software; and
a fifth communication link configured to communicate with the external aircraft data bus, wherein the first interface unit communicates with the vehicle management system computer over the external aircraft data bus.

## Patentansprüche

1. Signalschnittstelleneinheit (12) zur Verwendung in einem Luftfahrzeug, wobei die Signalschnittstelleneinheit einen Mikrocontroller, mindestens einen Verbinder (18a-18n) und eine erste Kommunikationsverbindung (50) enthält, die zwischen dem Mikrocontroller und dem mindestens einen Verbinder verbunden ist, wobei der Mikrocontroller konfiguriert ist, um Daten auf der ersten Kommunikationsverbindung zu senden und zu empfangen, wobei die Signalschnittstelleneinheit (12) durch Folgendes gekennzeichnet ist:
eine zweite Kommunikationsverbindung (22), die mit dem Mikrocontroller verbunden ist, wobei
der Mikrocontroller konfiguriert ist, um unter Verwendung der zweiten Kommunikationsverbindung Daten auf einem Luftfahrzeugdatenbus zu senden und zu empfangen, wobei die erste Kommunikationsverbindung (50) eine Ethernetverbindung ist und die zweite Kommunikationsverbindung eine zeitgesteuerte Ethernetverbindung ist;
eine dritte Kommunikationsverbindung (54), die zwischen dem Mikrocontroller und dem mindestens einen Verbinder verbunden ist, wobei die dritte Kommunikationsverbindung (54) eine Inter-Integrated-Circuit-Verbindung ist; und
eine vierte Kommunikationsverbindung (52), die zwischen dem Mikrocontroller und dem mindestens einen Verbinder verbunden ist, wobei die vierte Kommunikationsverbindung (52) eine deterministische Hochgeschwindigkeitsverbindung ist.

2. Signalschnittstelleneinheit (12) nach Anspruch 1, ferner umfassend eine Stromversorgungseinheit, die konfiguriert ist, um durch den mindestens einen Verbinder Strom bereitzustellen.

3. Signalschnittstelleneinheit (12) nach einem der vorstehenden Ansprüche, ferner umfassend:
einen Datenlogger; und
eine Vielzahl von Sensoren.

4. Luftfahrzeugsystem, umfassend:
die Signalschnittstelleneinheit aus Anspruch 1; und
ein erstes Untersystemmodul, das konfiguriert ist, um mit der Signalschnittstelleneinheit (12) über die erste Kommunikationsverbindung (50) zu kommunizieren.

5. Luftfahrzeugsystem nach Anspruch 4, wobei das erste Untersystemmodul ferner konfiguriert ist, um mit der Signalschnittstelleneinheit (12) über die dritte und vierte Kommunikationsverbindung zu kommunizieren.

6. Luftfahrzeugsystem nach Anspruch 4 oder 5, ferner umfassend:
eine Vielzahl von zweiten Untersystemmodulen, die konfiguriert ist, um mit der Signalschnittstelleneinheit (12) über die erste Kommunikationsverbindung (50) zu kommunizieren.

7. Luftfahrzeugsystem nach den Ansprüchen 4-6, ferner umfassend:
einen Fahrzeugverwaltungssystemcomputer, Folgendes umfassend:
einen Controller, der konfiguriert ist, um Steuersoftware auszuführen; und
eine fünfte Kommunikationsverbindung, die konfiguriert ist, um mit dem externen Luftfahrzeugdatenbus zu kommunizieren, wobei die erste Schnittstelleneinheit mit dem Fahrzeugverwaltungssystemcomputer über den externen Luftfahrzugdatenbus kommuniziert.

## Revendications

1. Unité d'interface de signal (12) pour une utilisation dans un avion, l'unité d'interface de signal comprenant un microcontrôleur, au moins un raccord (18a-18n), et une première liaison de communication (50) reliée entre le microcontrôleur et l'au moins un raccord, dans laquelle le microcontrôleur est configuré pour émettre et recevoir des données sur la première liaison de communication, l'unité d'interface de signal (12) étant **caractérisée en ce qu'** :
une deuxième liaison de communication (22) est reliée au microcontrôleur, dans laquelle le microcontrôleur est configuré pour envoyer et recevoir des données dans un bus de données d'avion en utilisant la deuxième liaison de communication, dans laquelle la première liaison de communication (50) est une liaison Ethernet et la deuxième liaison de communication est une liaison Ethernet à déclenchement temporel ;
une troisième liaison de communication (54) est reliée entre le microcontrôleur et l'au moins un raccord, dans laquelle la troisième liaison de communication (54) est une liaison de circuits inter-intégrés ; et
une quatrième liaison de communication (52) est reliée entre le microcontrôleur et l'au moins un raccord, dans laquelle la quatrième liaison de communication (52) est une liaison déterministe haute vitesse.

2. Unité d'interface de signal (12) selon la revendication 1, comprenant en outre une unité d'alimentation électrique configurée pour fournir de l'énergie par l'intermédiaire de l'au moins un raccord.

3. Unité d'interface de signal (12) selon l'une quelconque des revendications précédentes, comprenant en outre :
un enregistreur de données ; et
une pluralité de capteurs.

4. Système d'avion comprenant :
l'unité d'interface de signal selon la revendication 1 ; et
un premier module de sous-système configuré pour communiquer avec l'unité d'interface de signal (12) par l'intermédiaire de la première liaison de communication (50).

5. Système d'avion selon la revendication 4, dans lequel le premier module de sous-système est en outre configuré pour communiquer avec l'unité d'interface de signal (12) par l'intermédiaire des troisième et quatrième liaisons de communication.

6. Système d'avion selon les revendications 4 ou 5, comprenant
en outre :
une pluralité de seconds modules de sous-système configurés pour communiquer avec l'unité d'interface de signal (12) par l'intermédiaire de la première liaison de communication (50).

7. Système d'avion selon les revendications 4 à 6, comprenant en outre :
un ordinateur de système de gestion de véhicule comprenant :
un contrôleur configuré pour exécuter un logiciel de commande ; et
une cinquième liaison de communication configurée pour communiquer avec le bus de données d'avion externe, dans lequel la première unité d'interface communique avec l'ordinateur de système de gestion de véhicule sur le bus de données d'avion externe.
